# EUROPEAN PATENT SPECIFICATION

(11) **EP 4 033 129 B1**
(45) Date of publication and mention of the grant of the patent: **26.03.2025**
(21) Application number: 20865688.4
(22) Date of filing: 29.07.2020
(51) Int. Cl.: F16K 5/20, F16K 5/06, F16K 31/44

(54) **DBB FORCED SEAL VALVE AND OPERATION DEVICE**
DBB-ZWANGSDICHTUNGSVENTIL UND BETÄTIGUNGSVORRICHTUNG
SOUPAPE D'ÉTANCHÉITÉ FORCÉE DBB ET DISPOSITIF DE FONCTIONNEMENT

(30) Priority: 20.09.2019 CN 201910889922
(43) Date of publication of application: 27.07.2022
(73) Proprietor: Zibo Votaisi Petrochemical Equipment Co., Ltd, High-Tech Zone Zibo Shandong 255020 (CN)
(72) Inventor: LIU, Zhigang, Beijing 100125 (CN); CHEN, Jimeng, Zibo, Shandong 255120 (CN); LIU, Xiaoqi, Beijing 100125 (CN)
(74) Representative: Bewley, Ewan Stuart
(86) International application number: PCT/CN2020/105504
(87) International publication number: WO 2021/052018

(56) References cited:
- CN-A- 103 742 666
- CN-A- 108 361 405
- CN-A- 110 594 442
- CN-U- 207 261 704
- FR-A- 1 461 479
- GB-A- 285 446
- JP-A- H11 141 701
- US-A- 2 531 759

## Description

### Cross references to related applications

This application claims priority of application number 201910889922.5 filed with the Chinese Patent Office on September 20, 2019.

### Technical field

The present disclosure belongs to a forced sealing valve, and in particular relates to a double block and bleed (DBB) forced sealing valve and an operating device.

### Background technique

A DBB forced sealing valve has outstanding sealing performance. While the valve is in a closed position, its sealing integration can be verified with valve inline and under pressure, which ensures the reliability of valve closing. DBB forced sealing valves are needed for many important applications. For example, in a tank farm, different storage tanks are usually used to store different media which have to be strictly isolated to prevent any potential huge loss caused by contamination of the media. Hence, DBB forced sealing valves must be used for isolation valves of the tanks and shut-off valves of the tank farm. Similarly, in oil or natural gas metering, airport fuel systems, and other scenarios that require verifiable tight shut-off, the application of DBB forced sealing valves is always mandatorily required by major international codes and standards.

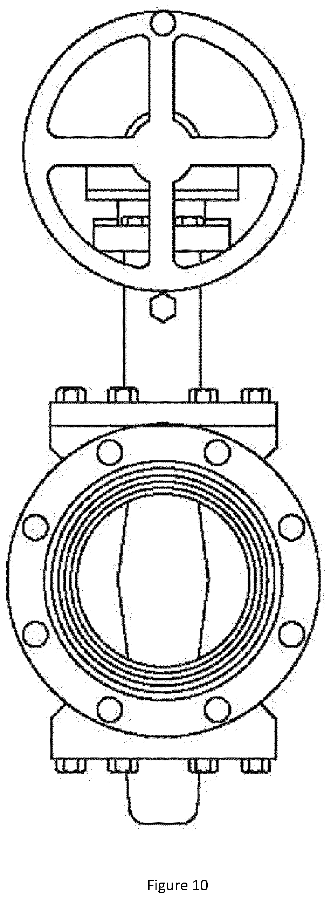

At present, DBB forced sealing valves on the market are a kind of expansion plug valves, as shown in Figure 10. Its structural feature is that the valve core is composed of a wedge plug and two discs on both sides. The valve core rotates friction free between the on/off positions. At the closed position, the wedge plug is driven down by the valve stem, and the discs are pushed through the wedge inclined surfaces to achieve a forced seal. The valve stem has to complete complex rotational and linear movements through a complicated operating mechanism during the entire valve opening and closing operations. Since the linear movement of the valve stem is in the same direction as the escape of medium, leaking at the stem of this kind of valve can easily occur. Besides, the complicated operating mechanism is arranged at the valve stem, so that the size of the valve stem part of this kind of valve is huge, usually more than double the height of the valve body. In addition, the valve core has to adopt a geometric shape similar to that of a plug valve. Limited by its geometric structure, if the flow passage of this kind of valve adopts a full port, the valve body will be very large. Therefore, such valves usually have to adopt reduced port designs, such as a rectangle or a rhombus passage. Such a compromise design has a huge impact on the flow capacity of the valve.

FR1461479 discloses a DBB forced sealing valve, including: a valve body; valve seats; a valve core arranged in the valve body; an upper sealing member driving part and a lower sealing member driving part arranged in the valve body and located on either side of the valve core; sealing members arranged between the valve seats and the upper and the lower sealing member driving parts; wherein, the upper sealing member driving part and the lower sealing member driving part can move along a rotation axis of the valve core, and the upper sealing member driving part and the lower sealing member driving part drive the sealing members to press against or to retract from the valve seats.

### Summary of the invention

The purpose of the present disclosure is to propose a technical solution for a DBB forced sealing valve and an operating device, optimize the structural design of DBB forced sealing valves, improve the sealing reliability at the valve stem, improve the flow capacity of the valve, and make the operating mechanism simple and reliable in structure.

In order to achieve the above purpose, the technical solution of the present disclosure is: a DBB forced sealing valve characterised in that the upper sealing member driving part is provided with an upper driving track for driving the sealing members and the lower sealing member driving part is provided with a lower driving track for driving the sealing members and wherein the upper driving track and the lower driving track are dovetail, the upper driving track is inclined to the axis of rotation of the valve core and the lower driving track is inclined to the axis of rotation of the valve core.

Furthermore, the valve core is provided with a flow passage; and the upper sealing member driving part and the lower sealing member driving part are located on each side of the flow passage.

Furthermore, the DBB forced sealing valve includes a valve stem that drives the valve core to rotate.

Furthermore, in order to drive the upper sealing member driving part and lower sealing member driving part to move along the valve core rotation axis, the DBB forced sealing valve further includes an upper driving shaft and a lower driving shaft located on the valve core and on each side of the flow passage. The upper driving shaft and the lower driving shaft drive the upper sealing member driving part and the lower sealing member driving part to move along the rotation axis of the valve core through threads.

Furthermore, to drive the upper sealing member driving part and the lower sealing member driving part along the valve core rotation axis in opposite directions, the threads of the upper driving shaft and the lower driving shaft are in opposite directions.

Furthermore, the lower sealing member driving part is provided with guiding holes; the upper sealing member driving part is provided with guiding bars correspondingly inserted into the guiding holes.

Furthermore, the valve body includes a valve bonnet; the valve bonnet is provided with a limiting groove; the upper sealing member driving part is provided with a limiting rod corresponding to the limiting groove to limit the rotation stroke of the upper sealing member drive part.

Furthermore, one end of the valve stem is provided with a hexagonal head; one end of the upper driving shaft is provided with an inner hexagonal hole; the hexagonal head is located in the inner hexagonal hole and fits with the inner hexagonal hole.

The DBB forced sealing valve includes a locking rocker arm set in the upper sealing member driving part; and a rocker arm base surface provided in the valve body. The rocker arm base surface is provided with a locking guide groove.

The valve core drives the upper and lower sealing member driving parts to rotate within a rotation stroke between an open position and a closed position. When the upper and lower sealing member driving parts rotate to the closed position, the valve core toggles the rocker arm to enter the locking guide groove, and the valve core continues to rotate towards the closing direction, driving the upper sealing member driving part to move along the rotation axis of the valve core. The locking rocker arm moves in the locking guide groove.

Furthermore, the locking rocker arm is provided with a rotating rocker. The valve core is provided with a rocker guide groove and a rocker guide surface. When the upper and lower sealing member driving parts rotate between the open position and the closed position, the rotating rocker is embedded in the rocker guide groove, and the locking rocker arm moves under the restriction of the base surface of the rocker arm. The valve core also drives the sealing member driving part to rotate. When the upper and lower sealing member driving parts rotate to the closed position, the rocker guide groove rotates the locking rocker arm through the rotating rocker, and the locking rocker arm enters the locking guide groove. The rotating rocker moves on the rocker guide surface.

Furthermore, to ensure that the locking rocker arm can leave the locking guide groove during the opening operation, the rocker guide groove is provided at a starting end of the rocker guide surface.

Furthermore, to ensure that the locking rocker arm can enter the locking guide groove during the closing operation, the opening end of the locking guide groove is provided with a transition groove. When the upper and lower sealing member driving parts rotate to the closed position, the locking rocker arm enters the locking guide groove through the transition groove.

The beneficial features of the present disclosure are: a balanced design is adopted for the valve core, which completely solves the problems of the rising valve stems used in the current DBB forced sealing valves. This greatly simplifies the structure of the valve stem and greatly improves the sealing reliability of the valve stem. More importantly, upper and lower sealing member driving parts are adopted to drive the motion and forced sealing of the sealing members via a two-way slope. This can effectively reduce the structural size of the valve and essentially optimise the geometric shape of the valve core. Consequently, the valve flow passage can naturally adopt a round shape to match the shape of the pipeline, which greatly improves the flow capacity of the valve and makes the overall size of the valve body very compact. The geometric optimization of the upper sealing member driving part, the lower sealing member driving part and the valve core also allows the valve body structure to differ from the complex casting valve body structure that the current DBB forced sealing valves have to adopt. The valve body of the DBB forced sealing valve in the present disclosure can flexibly adopt the side-entry structure, the top-entry structure or the all-welded structure of ordinary ball valves, and thus can easily adapt to a variety of applications. The valve core is used to drive the rocker arm; this mechanism makes the structure of the valve compact and the opening and closing of the valve convenient and reliable.

The present disclosure will be described in detail below with reference to drawings and embodiments.

### Description of the drawings

Figure 1 is a schematic structural diagram of the DBB forced sealing valve in an embodiment of the present disclosure;
Figure 2 is an exploded view of the DBB forced sealing valve in Figure 1;
Figure 3 is a local exploded view of the valve core, the upper sealing member driving part, the lower sealing member driving part and the sealing members in an embodiment of the present disclosure;
Figure 4 is an axial view of the valve body in an embodiment of the present disclosure. The valve seats are omitted and the valve is in its open position;
Figure 5 is an axial view of the valve body in an embodiment of the present disclosure. The valve seats are omitted, and the upper sealing member driving part is in the middle of its rotation between its open position and closed position;
Figure 6 is an axial view of the valve body in an embodiment of the present disclosure. The valve seats are omitted, and the upper sealing member driving part is in its closed position;
Figure 7 is an axial view of the valve body in an embodiment of the present disclosure. The valve seats are omitted, the upper sealing member driving part is in its closed position, and the valve core is pushing the locking rocker arm to enter the locking guide groove;
Figure 8 is a structural diagram of the valve in the forced sealing state in an embodiment of the present disclosure. To show the state of the locking rocker arm, the front side of the sealing member is omitted;
Figure 9 is a side sectional view of the valve in the forced sealing state in an embodiment of the present disclosure;
Figure 10 is a schematic diagram of a DBB forced sealing valve in related technologies.

### Detailed implementation description

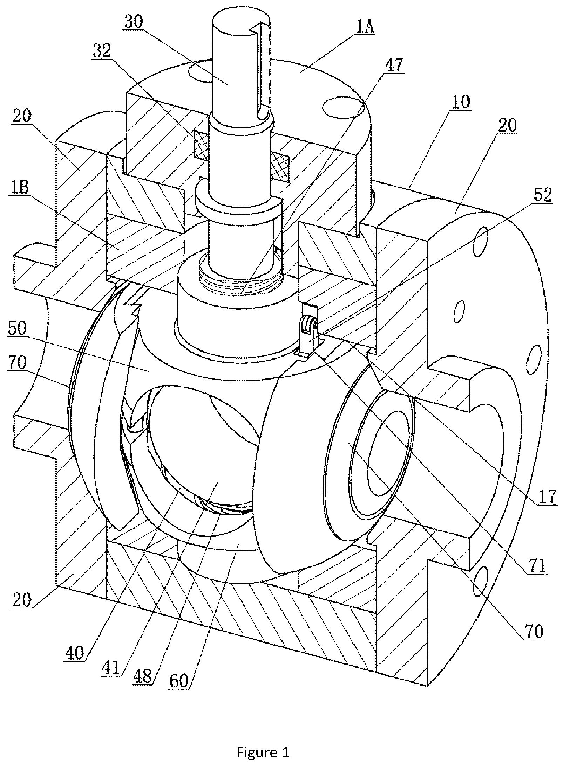

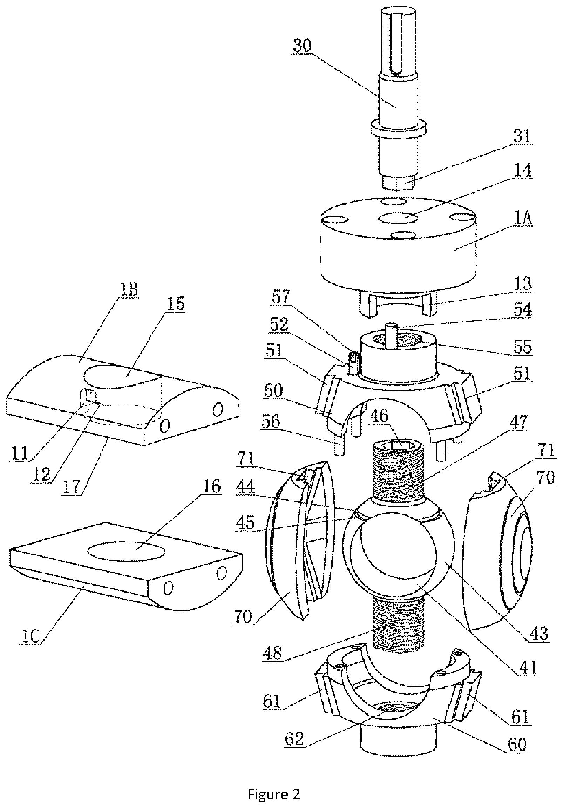

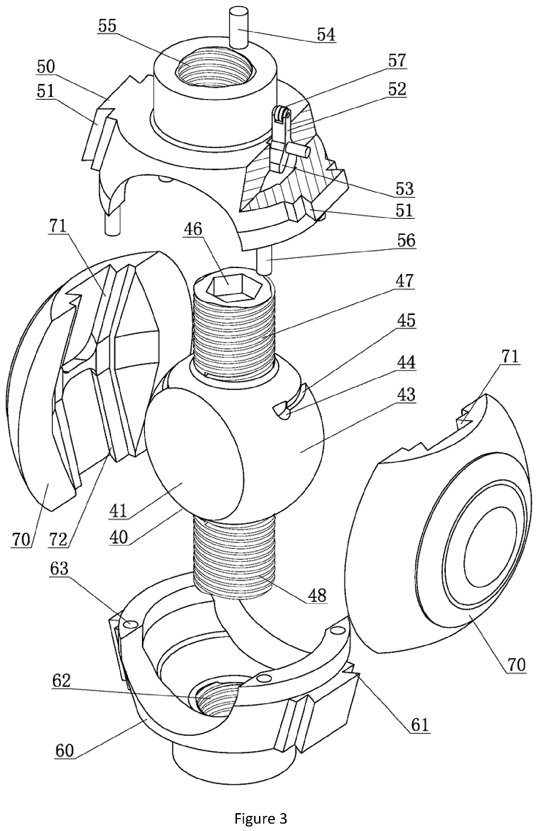

As shown in Figures 1 to 4, a DBB forced sealing valve includes a valve body 10, a valve seat 20, and a valve stem 30. The valve stem drives the valve core 40 to rotate. The valve core is provided with a flow passage 41. An upper sealing member driving part 50 and a lower sealing member driving part 60 are provided on either side of the flow passage respectively. When the valve core rotates relative to the upper sealing member driving part and the lower sealing member driving part, the upper sealing member driving part and the lower sealing member driving part move along the rotation axis of the valve core, and the upper sealing member driving part and the lower sealing member driving part drive the sealing member 70 to press against or to retract from the valve seats.

An upper drive shaft 47 and a lower drive shaft 48 are provided on either side of the valve core flow passage respectively. The upper drive shaft and the lower drive shaft drive the upper sealing member driving part and the lower sealing member driving part using threads.

The threads direction of the upper drive shaft is opposite to the threads direction of the lower drive shaft.

The upper sealing member driving part is provided with an upper driving track 51 for driving the sealing member, and the upper driving track is inclined relative to the rotation axis of the valve core; the lower sealing member driving part is provided with a lower driving track 61 for driving the sealing member, and the lower driving track is inclined relative to the rotation axis of the valve core.

The upper driving track and the lower driving track are dovetail tracks.

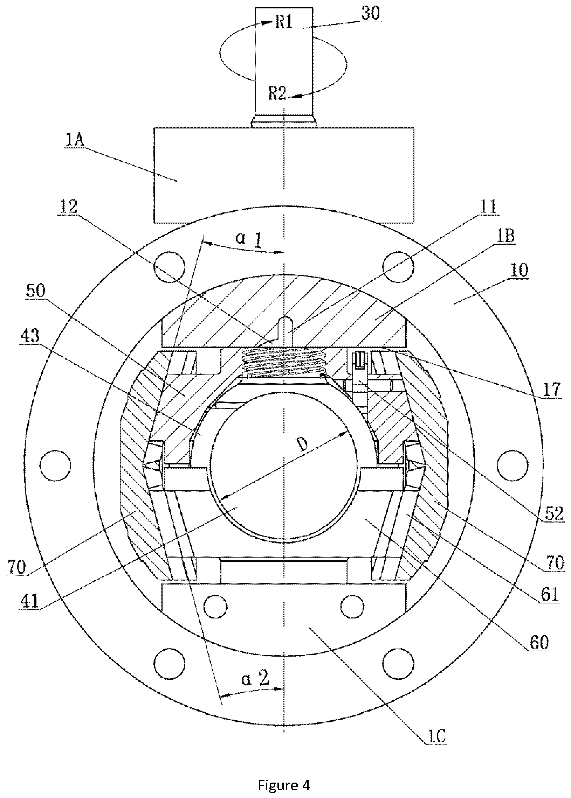

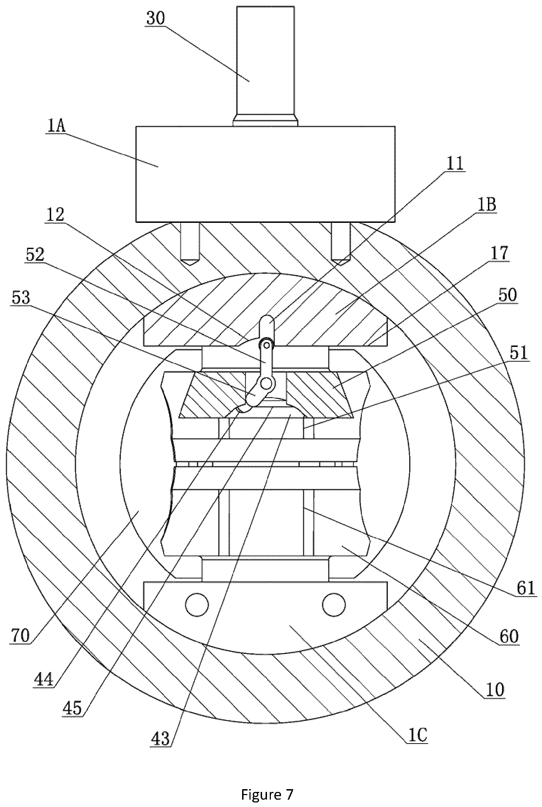

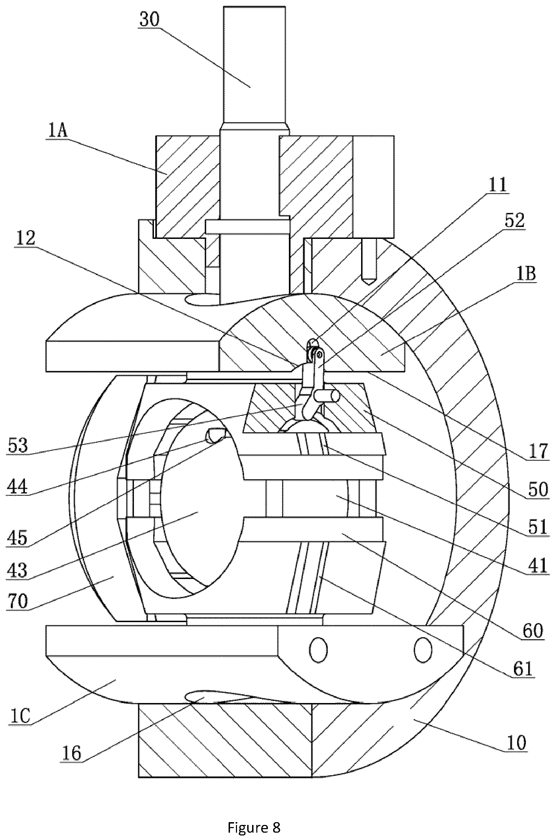

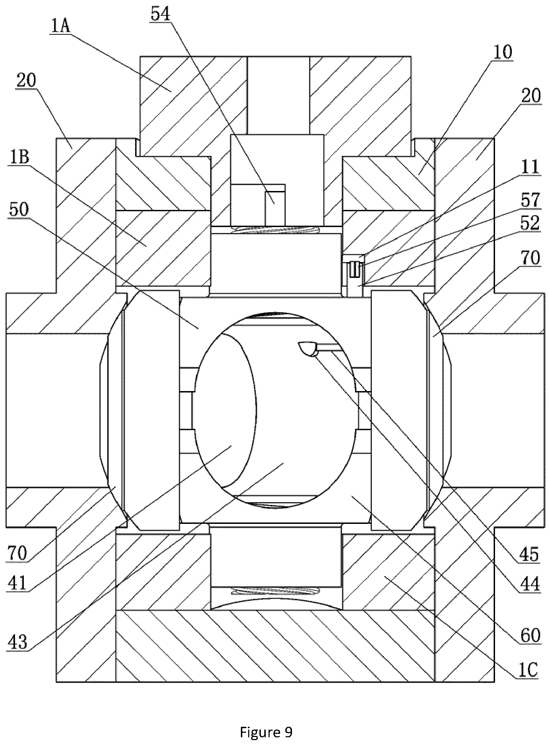

As shown in Figures 1-4, a DBB forced sealing valve operating device, the DBB forced sealing valve is provided with a valve body 10, a valve core 40 and an upper sealing member driving part 50. The valve core is provided with a flow passage 41. The above-mentioned upper sealing member driving part rotates between the open position (as shown in Figure 4) and the closed position (as shown in Figure 1). The valve core drives the upper sealing member driving part to rotate. The upper sealing member driving part is provided with a locking rocker arm 52. The valve body is provided with a rocker arm base surface 17; the rocker arm base surface is provided with a locking guide groove 11. The valve body is provided with an open stop and closed stop. When the upper sealing member driving part rotates to the closed position, the valve core pushes the locking rocker arm into the locking guide groove (as shown in Figure 7), and the valve core continues to rotate in the closing direction (i.e. the R2 direction in Figure 4) to drive the upper sealing member driving part to move along the rotation axis of the valve core. The locking rocker arm moves in the locking guide groove (as shown in Figures 8 and 9).

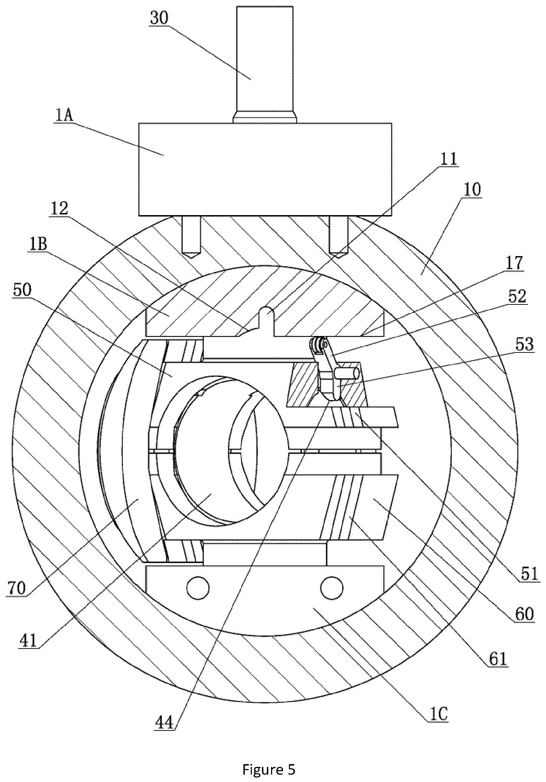

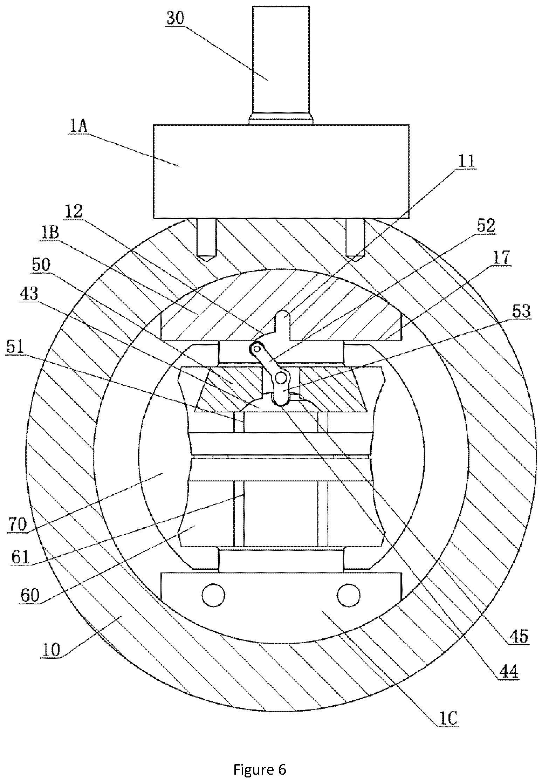

The locking rocker arm is provided with a rotating rocker 53. The valve core is provided with a rocker guide groove 44 and a rocker guide surface 45. When the upper sealing member driving part rotates between the open position and the closed position (as shown in the Figures 5 and 6), the rotating rocker is embedded in the rocker guide groove. The locking rocker arm moves under the restriction of the base surface of the rocker arm, and the valve core drives the upper sealing member driving part to rotate. When the upper sealing member driving part rotates to the closed position, the rocker guide groove pushes the locking rocker arm to rotate using the rotating rocker, the locking rocker arm enters the locking guide groove, and the rotating rocker moves on the rocker guide surface.

The rocker guide groove is provided at the starting end of the rocker guide surface. When the valve core rotates in the opening direction (i.e. the R1 direction in Figure 4), the rocker guide groove pushes the rotating rocker, and the locking rocker arm moves away from the locking guide groove.

The opening of the locking guide groove is provided with a transition groove 12, and in some working conditions, when the upper sealing member driving part rotates to the closed position, the locking rocker arm enters the locking guide groove through the transition groove.

### Embodiment one:

As shown in Figures 1 to 4, a DBB forced sealing valve includes a valve body 10, a valve seat 20 and a valve stem 30.

The valve body described in this disclosure is a valve body of a broad concept, including a valve body 10. The valve body is cylindrical. A valve bonnet 1A is provided on the upper side of the valve body. The valve bonnet and the valve body are provided with a through shaft hole 14. The valve stem is installed in the shaft hole. An upper bearing block 1B is provided on the upper side of the valve body, and a lower bearing block 1C is provided on the lower side of the valve body. The upper bearing block and the lower bearing block are respectively provided with bearing holes (15, 16). The valve body 10, the valve bonnet 1A, the upper bearing block 1B and the lower bearing block 1C are fixedly connected as a whole to form a generalized valve body.

Sealing ring 32 is provided between the valve stem and the valve bonnet.

Either end of the valve body is respectively provided with a generalized valve seat 20 (a valve seat in this embodiment is an assembly of a valve seat and a valve end).

A valve core 40 is installed in the valve body. The valve core is installed in the valve body through the bearing hole of the upper bearing block 1B and that of the lower bearing block 1C. A valve core ball 43 is provided at the centre of the valve core. A flow passage 41 is provided at the centre of the valve core ball; the flow passage is a circular through hole and the diameter D of the flow passage is identical to the diameter of the pipe on which the DBB forced sealing valve is installed such that the medium in the pipe can flow smoothly. The upper end of the valve core ball is provided with an upper drive shaft 47, and the lower end of the valve core ball is provided with a lower drive shaft 48. The upper drive shaft and the lower drive shaft are provided with threads, and the threads direction of the upper drive shaft is opposite to that of the lower drive shaft. An inner hexagonal hole 46 is provided at the top of the upper drive shaft. A hexagonal head 31 corresponding to the inner hexagonal hole of the valve core is provided on the lower end of the valve stem. The valve stem drives the valve core 40 to rotate via the hexagonal head; the valve stem can also drive the valve core via other driving connections.

An upper sealing member driving part 50 and a lower sealing member driving part 60 are respectively provided on either side of the flow passage of the valve core. The upper sealing member driving part is provided with a threaded hole 55 to be meshed with the threads of the upper drive shaft of the valve core. The lower sealing member driving part is provided with a threaded hole 62 to be meshed with the threads of the lower drive shaft of the valve core. The lower sealing member driving part is provided with four guide holes 63, and the upper sealing member driving part is provided with four guide rods 56 corresponding to the guide holes so that the upper sealing member driving part and the lower sealing member driving part can move coaxially and synchronously. The valve core drives the upper sealing member driving part and the lower sealing member driving part to move in opposite directions using threads.

Either side of the upper sealing member driving part is provided with an upper driving track 51 for driving the sealing members. The upper driving track is inclined to the rotation axis of the valve core at its upper end; the angle between the upper driving track and the rotation axis of the valve core is α1. Either side of the lower sealing member driving part is provided with a lower driving track 61 for driving the sealing members. The lower driving track is inclined to the rotation axis of the valve core at its lower end; the angle between the lower driving track and the rotation axis of the valve core is α2. In this embodiment, α1=α2.

It is also possible to adopt a scheme in which the thread pitch of the upper driving shaft differs from that of the lower driving shaft and α1 differs from α2 to realize the function of synchronously pushing out the sealing members.

The upper sealing member driving part and the lower sealing member driving part are respectively provided with a sealing member 70 on either side. The sealing members are provided with an upper guide groove 71 to be matched with the upper driving track 51, and a lower guide groove 72 to be matched with the lower driving track 61.

When the valve core rotates, it drives the upper sealing member driving part and the lower sealing member driving part to move along the rotation axis of the valve core in opposite directions. During the valve closing operation, the upper sealing member driving part and the lower sealing member driving part move away from the flow passage. The upper sealing member driving part and the lower sealing member driving part drive the sealing members to move outward, pressing against the valve seats. During the valve opening operation, the upper sealing member driving part and the lower sealing member driving part move towards the flow passage. The upper sealing member driving part and the lower sealing member driving part drive the sealing members to retract from the valve seats.

The upper driving track and the lower driving track are dovetail tracks, which are compact and provide stable transmission.

The DBB forced sealing valve of this embodiment retains the excellent sealing performance of the DBB forced sealing valves currently in the market. It provides a round passage for the medium in the valve. The diameter of the medium passage is identical to the diameter of the pipeline, allowing smooth flow of the medium. The upper sealing member driving part and the lower sealing member driving part drive the motion and the forced sealing of the sealing members via a two-way slope. This effectively reduces the structural size of the valve and is suitable for various pipeline installation occasions.

### The second embodiment

As shown in Figures 1 to 4, a DBB forced sealing valve operating device, the operating device of this embodiment is the operating device of the DBB forced sealing valve described in the first embodiment.

As described in the first embodiment, the forced sealing valve is provided with a valve body 10, a rotatable valve core 40 and an upper sealing member driving part 50. The valve core is provided with a flow passage 41, and the valve core drives the upper sealing member driving part to rotate between the open position (shown in Figure 4) and the closed position (shown in Figure 1). When the valve core rotates relative to the upper sealing member driving part, it drives the upper sealing member driving part via the thread to make the sealing member move along the axis of rotation of the valve core, so that the sealing member moves towards or retracts from the valve seat, realizing the forced sealing or opening of the valve.

The DBB forced sealing valve requires a set of operating mechanism. During the closing operation, the valve stem in a one-way rotation stroke drives the sealing member to rotate 90° to reach its closed position and achieves forced sealing. During the opening operation, the valve stem in a one-way rotation stroke lifts the sealing of the sealing member and drives the sealing member to rotate 90° to reach its open position.

As the operating device of the DBB forced sealing valve, the upper sealing member driving part is provided with a locking rocker arm 52; the axis of rotation of the locking rocker arm is perpendicular to the axis of rotation of the valve core. The locking rocker arm is provided with a rotating rocker 53. The bottom surface 17 of the upper bearing block 1B of the valve body is the rocker arm base surface; the rocker arm base surface is provided with a locking guide groove 11 and an arc-shaped transition groove 12 is provided at the opening of the locking guide groove. The valve core ball 43 is provided with a rocker guide groove 44 and a rocker guide surface 45, and the rocker guide surface is a spiral surface surrounding the valve core ball. The rocker guide groove is arranged at the starting end of the rocker guide surface, and this starting end refers to the front end of the valve core when the valve core rotates in the closing direction.

The upper sealing member driving part rotates between an open position and a closed position with a rotation stroke of 90°. To limit the rotation stroke of the upper sealing member driving part, as a part of the generalized valve body, the valve bonnet 1A is provided with a limit groove 13, and the upper sealing member driving part is provided with a limit rod 54 which corresponds to the limit groove 13. The limit groove and the limit rod limits the rotation stroke of the upper sealing member driving part.

Other strategies for controlling the rotation stroke can also be adopted, such as controlling the rotation of the lower valve sealing member drive part or controlling the rotation of the sealing member.

When the DBB forced sealing valve is in the open position, as shown in Figure 4, the flow passage 41 of the valve core is aligned with the valve seats at both ends. When the upper sealing member driving part rotates between the open position and the closed position (as shown in Figures 5 and 6), the rotating rocker 53 of the locking rocker arm is embedded in the rocker guide groove 44. At this moment, the locking rocker arm rotates below the rocker arm base surface, that is, the top end of the locking rocker arm rotates below the base surface 17 or is in sliding contact with the base surface 17; the valve core drives the upper sealing member driving part to rotate and it also drives the lower sealing member driving part and the sealing member to rotate synchronously.

During the closing operation of the valve, the valve stem drives the valve core to rotate in the closing direction (R2 direction as shown in Figure 4). When the upper sealing member driving part turns to the closed position, it stops rotating. The rocker guide groove 44 of the valve core pushes via the rotating rocker 53 the locking rocker arm 52 to rotate. The locking rocker arm enters the locking guide groove 11. The rotating rocker moves away from the rocker guide groove 44 (as shown in Figure 7) and moves on the rocker guide surface 45. Under normal conditions, the upper sealing member driving part rotates freely with the valve core, and the locking rocker arm can also rotate freely with the upper sealing member driving part. The top end of the locking rocker arm does not contact the base surface 17 of the rocker arm. When the upper sealing member driving part turns to the closed position and stops rotating, the top end of the locking rocker arm has already passed the locking guide groove. The rocker guide groove 44 of the valve core pushes the rotating rocker 53, and the top end of the locking rocker arm 52 rotates along the transition groove 12 into the locking guide groove 11. However, under some working conditions, such as when the upper sealing member driving part is prevented from rotating freely due to the rotational resistance that the flow medium exerts on the upper sealing member driving part or due to the friction exerted by the bearing block on the upper sealing member driving part, the guide groove 44 will push the rotating rocker 53 to power the rotation of the upper sealing member driving part. At this moment, the top end of the locking rocker arm 52 is in sliding contact with the rocker arm base surface 17. To avoid excessive friction between the rocker arm and the rocker arm base surface, a rolling bearing 57 is provided at the top of the locking rocker arm in this embodiment. During such motion, due to the force provided by the rocker guide groove 44, the top of the locking rocker arm 52 can directly enter the locking guide groove 11.

The valve core continues to rotate in the closing direction (i.e. the R2 direction as shown in Figure 4), and drives via the upper drive shaft 47 the upper sealing member driving part to move upwards along the valve core rotation axis. The locking rocker arm moves in the locking guide groove (as shown in Figures 8-9). At this moment, the valve core drives via the lower drive shaft 48 the lower sealing member driving part to move downwards along the valve core rotation axis. This achieves the mechanism described in the first embodiment: "the upper and lower sealing member driving parts move away from the flow passage. The upper and lower sealing member driving parts drive the sealing members to move outwards and to press against the valve seats to realize the forced sealing."

During the opening operation, the valve core rotates in the opening direction (i.e. the R1 direction in Figure 4). Since the locking rocker arm 52 is in the locking guide groove 11, the position of the upper sealing member driving part is locked and so the upper sealing member driving part does not rotate with the valve core. The valve core simultaneously drives via the upper drive shaft 47 and the lower drive shaft 48 the upper and lower sealing member driving parts to move along the valve core rotation axis. This realizes the mechanism described in the first embodiment: "the upper and lower sealing member driving parts move towards the flow passage and drive the sealing members to retract from the valve seats." When the position of the rocker guide groove 44 matches the position of the transition groove 12 (as illustrated in Figure 7), the rocker guide groove pushes the rocker. The locking rocker arm leaves the locking guide groove (as illustrated in Figure 6). The top of the locking rocker arm is lower than the rocker arm base surface 17. The locking rocker arm stops rotating when contacts the upper sealing member driving part. The valve core continues to rotate in the opening direction. The rocker guide groove drives via the rotating rocker the upper sealing member driving part to rotate along with the valve core to the open position (refer to Figure 4).

The present disclosure adopts a mechanism where the valve core drives the rocker arm; this mechanism is compact in size, which makes the opening and closing operations of the valve convenient and reliable.

## Claims

1. A DBB forced sealing valve, including:
a valve body (10);
valve seats (20);
a valve core (40) arranged in the valve body (10);
an upper sealing member driving part (50) and a lower sealing member driving part (60) arranged in the valve body (10) and located on either side of the valve core (40);
sealing members (70) arranged between the valve seats (20) and the upper and the lower sealing member driving parts (50, 60);
wherein, the upper sealing member driving part (50) and the lower sealing member driving part (60) can move along a rotation axis of the valve core (40), and the upper sealing member driving part (50) and the lower sealing member driving part (60) drive the sealing members (70) to press against or to retract from the valve seats (20);
**characterised in that** the upper sealing member driving part (50) is provided with an upper driving track (51) for driving the sealing members (70) and the lower sealing member driving part (60) is provided with a lower driving track (61) for driving the sealing members (70) and wherein the upper driving track (51) and the lower driving track (61) are dovetail tracks, the upper driving track (51) is inclined to the rotation axis of the valve core (40) and the lower driving track (61) is inclined to the rotation axis of the valve core (40).

2. The DBB forced sealing valve according to claim 1, wherein the valve core (40) is provided with a flow passage (41); and the upper and lower sealing member driving parts (50, 60) are located on either side of the flow passage (41).

3. The DBB forced sealing valve according to claim 2, wherein the DBB forced sealing valve comprises a valve stem (30) that drives the valve core (40) to rotate.

4. The DBB forced sealing valve according to claim 3, wherein the DBB forced sealing valve further comprises an upper drive shaft (47) and a lower drive shaft (48) which are arranged on the valve core (40) and respectively located on either side of the flow passage (41); the upper drive shaft (47) and the lower drive shaft (48) drive the upper sealing member driving part (50) and the lower sealing member driving part (60) to move along the rotation axis of the valve core (40) using threads.

5. The DBB forced sealing valve according to claim 4, wherein the thread direction of the upper drive shaft (47) is opposite to the thread direction of the lower drive shaft (48).

6. The DBB forced-sealing valve according to claim 1, wherein the lower sealing member driving part (60) is provided with guide holes (63); the upper sealing member driving part (50) is provided with guide rods (56) to match the guide holes (63).

7. The DBB forced sealing valve according to claim 1, wherein the valve body (40) includes a valve bonnet (1A), the valve bonnet (1A) is provided with a limit groove (13), and the upper sealing member driving part (50) is provided with a limit rod (54) which matches the limit groove (13) to limit the rotation stroke of the upper sealing member drive part (50).

8. The DBB forced sealing valve according to claim 3, wherein one end of the valve stem (30) is provided with a hexagonal head (31); one end of the upper drive shaft (47) is provided with an inner hexagonal hole (46); the hexagonal head (31) is fitted in the inner hexagon hole (46).

9. The DBB forced sealing valve according to claim 1, including:
a locking rocker arm (52) provided in the upper sealing member drive part (50);
a rocker arm base surface (17) provided in the valve body (40), the rocker arm base surface (17) being provided with a locking guide groove (11);
wherein, the valve core (40) drives the upper and lower sealing member drive parts (50, 60) to rotate within a rotation stroke between an open position and a closed position; when the upper and lower sealing member drive parts (50, 60) rotate to the closed position, the valve core (40) pushes the locking rocker arm (52) into the locking guide groove (11); the valve core (40) continues to rotate in the closing direction, driving the upper and lower sealing member drive parts (50, 60) to move along the rotation axis of the valve core (40); the locking rocker arm (52) moves in the locking guide groove (11).

10. The DBB forced sealing valve according to claim 9, wherein the locking rocker arm (52) is provided with a rotating rocker (53) and the valve core (40) is provided with a rocker guide groove (44) and a rocker guide surface (45); when the upper and lower sealing member drive parts (50, 60) rotate between the open position and the closed position, the rotating rocker (53) is embedded in the rocker guide groove (44); the locking rocker arm (52) moves under the restriction of the rocker arm base surface (17), and the valve core (40) drives the upper and lower sealing member drive parts (50, 60) to rotate; when the upper and lower sealing member drive parts (50, 60) rotate to the closed position, the rocker guide groove (44) pushes the locking rocker arm (52) via the rotating rocker (53), the locking rocker arm (52) enters the locking guide groove (44), and the rotating rocker (53) moves on the rocker guide surface (45).

11. The DBB forced sealing valve according to claim 9, wherein the rocker guide groove (44) is provided at a starting end of the rocker guide surface (45).

12. The DBB forced sealing valve according to claim 9, wherein the opening of the locking guide groove (44) is provided with a transition groove (12), and when the upper and lower sealing member drive parts (50, 60) rotate to the closed position, the locking rocker arm (52) enters the locking guide groove (44) through the transition groove (12).

## Patentansprüche

1. DBB-Zwangsabdichtungsventil, das Folgendes enthält:
einen Ventilkörper (10);
Ventilsitze (20);
einen Ventileinsatz (40), der im Ventilkörper (10) angeordnet ist;
ein oberes Dichtungselement-Antriebsteil (50) und ein unteres Dichtungselement-Antriebsteil (60), die im Ventilkörper (10) angeordnet sind und sich auf beiden Seiten des Ventileinsatzes (40) befinden;
Dichtungselemente (70), die zwischen den Ventilsitzen (20) und dem oberen und dem unteren Dichtungselement-Antriebsteil (50, 60) angeordnet sind;
wobei das obere Dichtungselement-Antriebsteil (50) und das untere Dichtungselement-Antriebsteil (60) sich entlang einer Drehachse des Ventileinsatzes (40) bewegen können, und das obere Dichtungselement-Antriebsteil (50) und das untere Dichtungselement-Antriebsteil (60) die Dichtungselemente (70) antreiben, um gegen die Ventilsitze (20) zu drücken oder sich von diesen zurückzuziehen;
**dadurch gekennzeichnet, dass** das obere Dichtungselement-Antriebsteil (50) mit einer oberen Antriebsspur (51) zum Antreiben der Dichtungselemente (70) versehen ist und das untere Dichtungselement-Antriebsteil (60) mit einer unteren Antriebsspur (61) zum Antreiben der Dichtungselemente (70) versehen ist, und wobei die obere Antriebsspur (51) und die untere Antriebsspur (61) Schwalbenschwanzspuren sind, die obere Antriebsspur (51) zur Drehachse des Ventileinsatzes (40) geneigt ist und die untere Antriebsspur (61) zur Drehachse des Ventileinsatzes (40) geneigt ist.

2. DBB-Zwangsabdichtungsventil nach Anspruch 1, wobei der Ventileinsatz (40) mit einem Strömungskanal (41) versehen ist; und sich das obere und das untere Dichtungselement-Antriebsteil (50, 60) auf beiden Seiten des Strömungskanals (41) befinden.

3. DBB-Zwangsabdichtungsventil nach Anspruch 2, wobei das DBB-Zwangsabdichtungsventil einen Ventilschaft (30) umfasst, der den Ventileinsatz (40) zum Drehen antreibt.

4. DBB-Zwangsabdichtungsventil nach Anspruch 3, wobei das DBB-Zwangsabdichtungsventil ferner eine obere Antriebswelle (47) und eine untere Antriebswelle (48) umfasst, die auf dem Ventileinsatz (40) angeordnet sind und sich jeweils auf beiden Seiten des Strömungskanals (41) befinden; wobei die obere Antriebswelle (47) und die untere Antriebswelle (48) das obere Dichtungselement-Antriebsteil (50) und das untere Dichtungselement-Antriebsteil (60) mit Hilfe von Gewinden so antreiben, dass sie sich entlang der Drehachse des Ventileinsatzes (40) bewegen.

5. DBB-Zwangsabdichtungsventil nach Anspruch 4, wobei die Gewinderichtung der oberen Antriebswelle (47) der Gewinderichtung der unteren Antriebswelle (48) entgegengesetzt ist.

6. DBB-Zwangsabdichtungsventil nach Anspruch 1, wobei das untere Dichtungselement-Antriebsteil (60) mit Führungslöchern (63) versehen ist; wobei das obere Dichtungselement-Antriebsteil (50) mit Führungsstangen (56) versehen ist, die zu den Führungslöchern (63) passen.

7. DBB-Zwangsabdichtungsventil nach Anspruch 1, wobei der Ventilkörper (40) einen Ventildeckel (1A) enthält, der Ventildeckel (1A) mit einer Begrenzungsnut (13) versehen ist und das obere Dichtungselement-Antriebsteil (50) mit einer Begrenzungsstange (54) versehen ist, die mit der Begrenzungsnut (13) zusammenpasst, um den Drehhub des oberen Dichtungselement-Antriebsteils (50) zu begrenzen.

8. DBB-Zwangsabdichtungsventil nach Anspruch 3, wobei ein Ende des Ventilschafts (30) mit einem Sechskantkopf (31) versehen ist; ein Ende der oberen Antriebswelle (47) mit einem inneren Sechskantloch (46) versehen ist; und der Sechskantkopf (31) in das innere Sechskantloch (46) eingepasst ist.

9. DBB-Zwangsabdichtungsventil nach Anspruch 1, das Folgendes enthält:
einen Verriegelungskipphebel (52), der im oberen Dichtungselement-Antriebsteil (50) vorgesehen ist;
eine Kipphebelbasisfläche (17), die im Ventilkörper (40) vorgesehen ist, wobei die Kipphebelbasisfläche (17) mit einer Verriegelungsführungsnut (11) versehen ist;
wobei der Ventileinsatz (40) das obere und das untere Dichtungselement-Antriebsteil (50, 60) zum Drehen innerhalb eines Drehhubs zwischen einer geöffneten Position und einer geschlossenen Position antreibt; wenn sich das obere und das untere Dichtungselement-Antriebsteil (50, 60) in die geschlossene Position drehen, der Ventileinsatz (40) den Verriegelungskipphebel (52) in die Verriegelungsführungsnut (11) drückt; der Ventileinsatz (40) sich weiter in die Schließrichtung dreht und das obere und das untere Dichtungselement-Antriebsteil (50, 60) zum Bewegen entlang der Drehachse des Ventileinsatzes (40) antreibt; und der Verriegelungskipphebel (52) sich in der Verriegelungsführungsnut (11) bewegt.

10. DBB-Zwangsabdichtungsventil nach Anspruch 9, wobei der Verriegelungskipphebel (52) mit einer drehbaren Kippvorrichtung (53) versehen ist und der Ventileinsatz (40) mit einer Kippvorrichtungs-Führungsnut (44) und einer Kippvorrichtungs-Führungsfläche (45) versehen ist; wenn das obere und das untere Dichtungselement-Antriebsteil (50, 60) sich zwischen der geöffneten Position und der geschlossenen Position drehen, die drehbare Kippvorrichtung (53) in der Kippvorrichtungs-Führungsnut (44) eingebettet ist; der Verriegelungskipphebel (52) sich unter der Beschränkung der Kipphebelbasisfläche (17) bewegt, und der Ventileinsatz (40) das obere und das untere Dichtungselement-Antriebsteil (50, 60) zum Drehen antreibt; wenn das obere und das untere Dichtungselement-Antriebsteil (50, 60) sich in die geschlossene Position drehen, die Kipphebel-Führungsnut (44) den Verriegelungskipphebel (52) über die drehbare Kippvorrichtung (53) drückt, der Verriegelungskipphebel (52) in die Verriegelungsführungsnut (44) eintritt und sich die drehbare Kippvorrichtung (53) auf der Kipphebel-Führungsfläche (45) bewegt.

11. DBB-Zwangsabdichtungsventil nach Anspruch 9, wobei die Kipphebelführungsnut (44) an einem Anfangsende der Kipphebelführungsfläche (45) vorgesehen ist.

12. DBB-Zwangsabdichtungsventil nach Anspruch 9, wobei die Öffnung der Verriegelungsführungsnut (44) mit einer Übergangsnut (12) versehen ist und der Verriegelungskipphebel (52) durch die Übergangsnut (12) in die Verriegelungsführungsnut (44) eintritt, wenn sich das obere und das untere Dichtungselement-Antriebsteil (50, 60) in die geschlossene Position drehen.

## Revendications

1. Soupape à étanchéité forcée DBB, comprenant :
un corps de soupape (10) ;
des sièges de soupape (20) ;
un noyau de soupape (40) disposé dans le corps de soupape (10) ;
une partie d'entraînement de l'élément d'étanchéité supérieur (50) et une partie d'entraînement de l'élément d'étanchéité inférieur (60) disposées dans le corps de la soupape (10) et situées de part et d'autre du noyau de la soupape (40) ;
des éléments d'étanchéité (70) disposés entre les sièges de soupape (20) et les parties d'entraînement des éléments d'étanchéité supérieur et inférieur (50, 60) ;
dans laquelle la partie d'entraînement de l'élément d'étanchéité supérieur (50) et la partie d'entraînement de l'élément d'étanchéité inférieur (60) peuvent se déplacer le long d'un axe de rotation du noyau de la soupape (40), et la partie d'entraînement de l'élément d'étanchéité supérieur (50) et la partie d'entraînement de l'élément d'étanchéité inférieur (60) entraînent les éléments d'étanchéité (70) à se presser contre les sièges de soupape (20) ou à se rétracter de ceux-ci ;
**caractérisée en ce que** la partie d'entraînement de l'élément d'étanchéité supérieur (50) est pourvue d'une piste d'entraînement supérieure (51) pour entraîner les éléments d'étanchéité (70) et que la partie d'entraînement de l'élément d'étanchéité inférieur (60) est pourvue d'une piste d'entraînement inférieure (61) pour entraîner les éléments d'étanchéité (70) et que la piste d'entraînement supérieure (51) et la piste d'entraînement inférieure (61) sont des pistes en queue d'aronde, que la piste d'entraînement supérieure (51) est inclinée par rapport à l'axe de rotation du noyau de la soupape (40) et que la piste d'entraînement inférieure (61) est inclinée par rapport à l'axe de rotation du noyau de la soupape (40).

2. Soupape à étanchéité forcée DBB selon la revendication 1, dans laquelle le noyau de la soupape (40) est pourvu d'un passage d'écoulement (41) ; et les parties d'entraînement des éléments d'étanchéité supérieur et inférieur (50, 60) sont situées de part et d'autre du passage d'écoulement (41).

3. Soupape à étanchéité forcée DBB selon la revendication 2, dans laquelle la soupape à étanchéité forcée DBB comprend une tige de soupape (30) qui entraîne le noyau de la soupape (40) en rotation.

4. Soupape à étanchéité forcée DBB selon la revendication 3, dans laquelle la soupape à étanchéité forcée DBB comprend en outre un arbre d'entraînement supérieur (47) et un arbre d'entraînement inférieur (48) disposés sur le noyau de la soupape (40) et situés respectivement de part et d'autre du passage d'écoulement (41) ; l'arbre d'entraînement supérieur (47) et l'arbre d'entraînement inférieur (48) entraînent la partie d'entraînement de l'élément d'étanchéité supérieur (50) et la partie d'entraînement de l'élément d'étanchéité inférieur (60) à se déplacer le long de l'axe de rotation du noyau de la soupape (40) à l'aide de filetages.

5. Soupape à étanchéité forcée DBB selon la revendication 4, dans laquelle le sens du filetage de l'arbre d'entraînement supérieur (47) est opposé au sens du filetage de l'arbre d'entraînement inférieur (48).

6. Soupape à étanchéité forcée DBB selon la revendication 1, dans laquelle la partie d'entraînement de l'élément d'étanchéité inférieur (60) est pourvue de trous de guidage (63) ; la partie d'entraînement de l'élément d'étanchéité supérieur (50) est pourvue de tiges de guidage (56) pour s'adapter aux trous de guidage (63).

7. Soupape à étanchéité forcée DBB selon la revendication 1, dans laquelle le corps de la soupape (40) comprend un chapeau de soupape (1A), le chapeau de soupape (1A) est pourvu d'une rainure de limite (13), et la partie d'entraînement de l'élément d'étanchéité supérieur (50) est pourvue d'une tige de limite (54) qui correspond à la rainure de limite (13) pour limiter la course de rotation de la partie d'entraînement de l'élément d'étanchéité supérieur (50).

8. Soupape à étanchéité forcée DBB selon la revendication 3, dans laquelle une extrémité de la tige de soupape (30) est pourvue d'une tête hexagonale (31) ; une extrémité de l'arbre d'entraînement supérieur (47) est pourvue d'un trou hexagonal intérieur (46) ; la tête hexagonale (31) est montée dans le trou hexagonal intérieur (46).

9. Soupape à étanchéité forcée DBB selon la revendication 1, comprenant :
un culbuteur de verrouillage (52) prévu dans la partie d'entraînement de l'élément d'étanchéité supérieur (50) ;
une surface de base du culbuteur (17) prévue dans le corps de la soupape (40), la surface de base du culbuteur (17) étant pourvue d'une rainure de guidage de verrouillage (11) ;
dans laquelle le noyau de la soupape (40) entraîne les parties d'entraînement des éléments d'étanchéité supérieur et inférieur (50, 60) en rotation dans une course de rotation entre une position ouverte et une position fermée ; lorsque les parties d'entraînement des éléments d'étanchéité supérieur et inférieur (50, 60) tournent en position fermée, le noyau de la soupape (40) pousse le culbuteur de verrouillage (52) dans la rainure de guidage de verrouillage (11) ; le noyau de la soupape (40) continue à tourner dans le sens de la fermeture, entraînant les parties d'entraînement des éléments d'étanchéité supérieur et inférieur (50, 60) à se déplacer le long de l'axe de rotation du noyau de la soupape (40) ; le culbuteur de verrouillage (52) se déplace dans la rainure de guidage de verrouillage (11).

10. Soupape à étanchéité forcée DBB selon la revendication 9, dans laquelle le culbuteur de verrouillage (52) est pourvu d'un culbuteur rotatif (53) et le noyau de la soupape (40) est pourvu d'une rainure de guidage de culbuteur (44) et d'une surface de guidage de culbuteur (45) ; lorsque les parties d'entraînement des éléments d'étanchéité supérieur et inférieur (50, 60) tournent entre la position ouverte et la position fermée, le culbuteur rotatif (53) est encastré dans la rainure de guidage du culbuteur (44) ; le culbuteur de verrouillage (52) se déplace sous la contrainte de la surface de base du culbuteur (17), et le noyau de la soupape (40) entraîne la rotation des parties d'entraînement des éléments d'étanchéité supérieur et inférieur (50, 60) ; lorsque les parties d'entraînement des éléments d'étanchéité supérieur et inférieur (50, 60) tournent en position fermée, la rainure de guidage du culbuteur (44) pousse le culbuteur de verrouillage (52) par l'intermédiaire du culbuteur rotatif (53), le culbuteur de verrouillage (52) entre dans la rainure de guidage de verrouillage (44), et le culbuteur rotatif (53) se déplace sur la surface de guidage du culbuteur (45).

11. Soupape à étanchéité forcée DBB selon la revendication 9, dans laquelle la rainure de guidage du culbuteur (44) est prévue à une extrémité initiale de la surface de guidage du culbuteur (45).

12. Soupape à étanchéité forcée DBB selon la revendication 9, dans laquelle l'ouverture de la rainure de guidage de verrouillage (44) est pourvue d'une rainure de transition (12), et lorsque les parties d'entraînement des éléments d'étanchéité supérieur et inférieur (50, 60) tournent en position fermée, le culbuteur de verrouillage (52) pénètre dans la rainure de guidage de verrouillage (44) à travers la rainure de transition (12).
